# EUROPEAN PATENT SPECIFICATION

(11) **EP 1 793 558 B1**
(45) Date of publication and mention of the grant of the patent: **29.10.2008**
(21) Application number: 05257443.1
(22) Date of filing: 02.12.2005
(51) Int. Cl.: H04L 29/08

(54) **Distributed server network**
Verteiltes Servernetz
Réseau distribué de serveur

(43) Date of publication of application: 06.06.2007
(73) Proprietor: Mitel Networks Corporation, Ottawa, Ontario K2K 2W7 (CA)
(72) Inventor: Nason, Christopher James, Kanata, Ontario K2T 1G2 (CA); Provencal, Paul, Gatineau, Quebec J9A 2Y5 (CA); Star, Robert, Kanata, Ontario (CA)
(74) Representative: Beresford, Keith Denis Lewis

(56) References cited:
- WO-A-02/29551
- US-A1- 2003 028 623

## Description

### FIELD OF THE INVENTION

The present invention relates to communication systems, in particular, to a distributed TFTP server network for downloading software to a plurality of devices connected to the network.

### BACKGROUND OF THE INVENTION

In medium size and large businesses, communication between devices is typically established over a network, such as a LAN or a WAN, for example. In order to communicate over the network, devices such as IP phones, computers, or other network devices must be assigned an IP address. This is normally accomplished by the device requesting an IP address from a server using Dynamic Host Configuration Protocol (DHCP). In addition, when the device is first connected to the network or when software upgrades are required, devices such as IP phones customarily incorporate a TFTP client in order to download software, including executable binary files, from a central TFTP server, such as a PBX. TFTP (Trivial File Transfer Protocol) is a simple file transfer protocol used for downloading bootcode to diskless devices, such as IP phones. TFTP is set forth in RFC 1350 published by the Network Working Group in July 1992.

However, the PBX is only able to perform a limited number of concurrent TFTP sessions because each TFTP session between a phone client and the PBX burdens the processing capability of the PBX.

The size of the downloaded executable binary files has grown from approximately 256 KB to approximately 4 MB and continues to grow. At the same time, the size of PBXs continues to grow, with increasing numbers of phones. The large size of the executable binary files and the increased number of phones connected to the PBX compromises the performance of the PBX. Bandwidth utilization and upgrade time for all connected phones is also impacted.

Many PBX configurations include remote campuses routed over T1 links and other bandwidth limited media to a central TFTP server. IP fragmentation in routed networks and narrow communication connections results in TFTP download times becoming onerous. In addition, the processing capability of the PBX is impacted by phones performing DHCP, attempting to make TCP connections or attempting SSL or other secure protocols on top of TCP.

It is therefore desirable to improve TFTP download time from a PBX to multiple IP phones, and otherwise reduce the processing burden on the PBX.
US 2003/0028623A1 describes a distributed computing system that facilitates receiving content at a client from one or more servers that can potentially provide the content. The client starts by sending a request for the content to a directory server. In response to the request, the client receives a list of candidate servers that can potentially provide the content from the directory server. Once the client has received the list of candidate servers, the client sends a request to one or more of the candidate servers for the content, and subsequently receives the content from one or more of the candidate servers.
Aspects of the present invention are set out in the appended independent claims.

An embodiment of the present invention provides a method for providing a distributed TFTP server network among a plurality of IP devices, the method including:
providing a plurality of IP devices, each of the IP devices being in communication with a central TFTP server;
each IP device maintaining a list of available servers, the central TFTP server remaining at the bottom of the list of available servers;
at least one IP device selecting a TFTP server from the top of the list of available servers and attempting to connect to the TFTP server;
downloading software from the TFTP server to the at least one IP device;
the at least one IP device sending a server ready signal over the distributed TFTP server network following successful download of the software whereupon the at least one IP device is added to the top of the list of available servers and operates as a further TFTP server for allowing other IP devices in the distributed TFTP server network to attempt to connect to the further TFTP server for downloading the software.

The distributed TFTP method of the embodiment reduces the number of TFTP clients that the central TFTP server (i.e. PBX) must service. Further, the distributed TFTP method reduces the number of router hops and possible MTU (Maximum Transmission Unit) fragmentation between the TFTP servers and TFTP clients. Additionally, TFTP traffic over the external communication links of remote campuses will also be reduced.

### BRIEF DESCRIPTION OF THE DRAWINGS

The invention will be better understood with reference to the following Figures in which like numerals denote like parts and in which:

Figure 1 is a schematic view of an exemplary PBX network;

Figure 2 is a schematic view showing communication among phones within the PBX network of Figure 1 for establishing a distributed TFTP network according to the present invention; and

Figure 3 is a timing diagram showing operation of the distributed TFTP network of Figure 2.

### DETAILED DESCRIPTION OF THE PREFERRED EMBODIMENTS

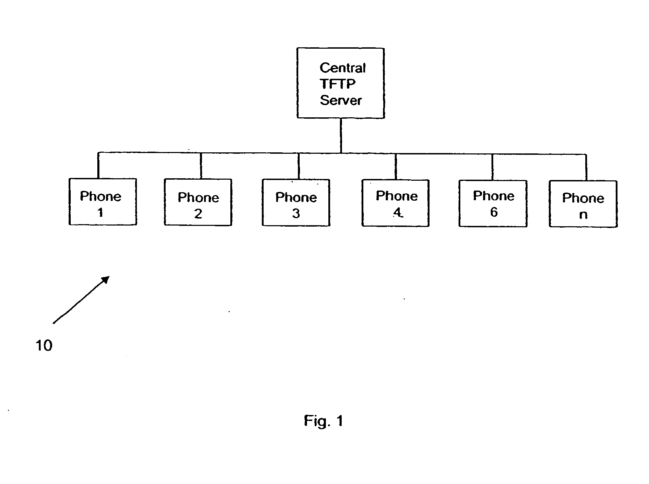

Referring to Figure 1, a schematic overview of a PBX network 10 is generally shown. The network 10 includes a central TFTP server and a plurality of IP phones. The phones are linked to the central TFTP server via a local area network (LAN) in a manner that is well known in the art. The phones may alternatively be linked to the TFTP server via a wireless connection or any medium that supports a TCP/IP network.

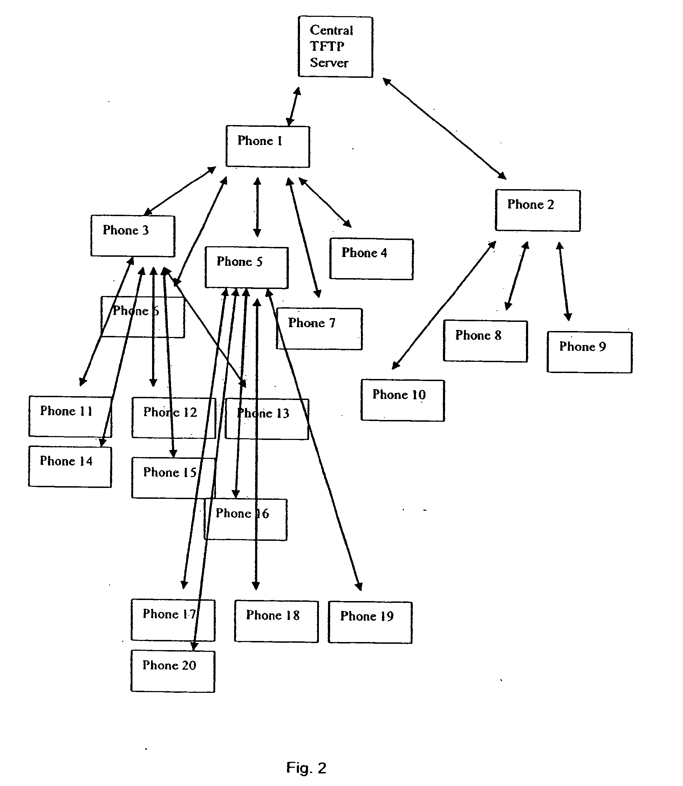

Each phone contains a TFTP client that has the ability to transform itself into a TFTP server. As such, a phone may download software from the central TFTP server or, alternatively, may download software from another phone that has transformed itself into a TFTP server. An example of a distributed TFTP method is shown in Figure 2 in which phones 1, 2, 3 and 5 have transformed into TFTP servers in order to service other phones. Once a phone has downloaded the software from the central TFTP server or another phone, it can transform itself into a TFTP server. As such, the number of TFTP servers that are available to the network 10 grows over time.

Each phone is provided with two IP addresses. The first IP address is the central TFTP server IP address. The second IP address is used to allow the phones to communicate with one another and may be either a multicast group address or a broadcast address. The TFTP sessions between the phones and the central TFTP server are unicast. Similarly, the TFTP sessions between the phones and a phone that has transformed itself into a TFTP server are also unicast. The phones only use multicasts or broadcasts to communicate server status with one another.

The phones determine that the distributed TFTP method is being used by the network 10 from the DHCP options or from manual entry, i.e. because there are two TFTP IP addresses. The phones know that they are to attempt the distributed TFTP method if one of the TFTP addresses provided to them is a multicast or broadcast IP address. Such addresses can be identified because they fall in the range of 224.0.0.0 to 239.255.255.255. If the phones detect a TFTP IP address in this range, they determine that the distributed TFTP method is being used.

In the distributed TFTP method, each phone institutes a random back off prior to attempting TFTP. All phones must observe and complete a random back off before attempting to initiate a TFTP session.

When a phone completes a TFTP download, it transmits a "TFTP Server Ready" message using the designated communication protocol dictated by DHCP or manual entry. The information that is transmitted with the "TFTP Server Ready" message includes: set type, filename available, file revision number, phone IP address and phone MAC address. Each time a phone in a random back off state reads a "TFTP Server Ready" message with a corresponding set type and filename, it adds the TFTP server to it's TFTP server list. Each new TFTP server is added to the top of the list. The central TFTP server, which the phone discovers via DHCP or manual entry, remains at the bottom of the list.

When searching for a TFTP server, phones start at the top of their TFTP server list and continue down the list until an available TFTP server is found. Phones that are in TFTP server mode service five TFTP sessions, either sequentially or concurrently. Additional TFTP session requests are answered with a TFTP error message. If a phone is rejected, the phone then attempts a TFTP session with the next TFTP server on it's TFTP server list. Phones that are in TFTP server mode resume normal operation if they have completed five TFTP session requests or if they have completed less than 5 TFTP session requests and more than 10 seconds has elapsed since their last TFTP session request. Once a phone has resumed normal operation, further TFTP requests from other phones are denied.

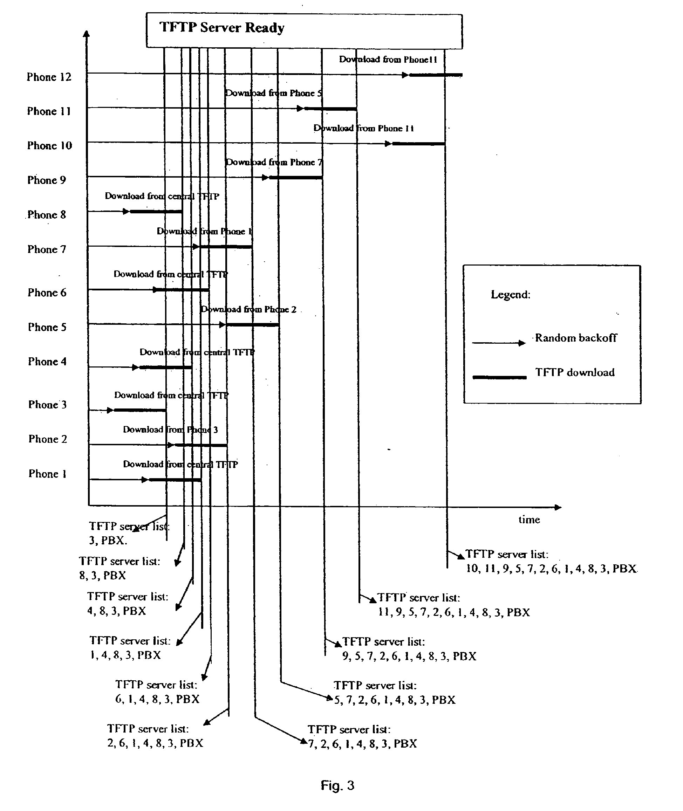

Figure 3 shows a chart of a distributed TFTP phone scheme. As shown, the phone with the shortest random back off (phone 3 in Figure 3) is generally the first to initiate and complete a TFTP session with the central TFTP server. For phone 3, the sequence of events is as follows. Initially, phone 3's TFTP server list is populated by a single IP address, the central TFTP server. Phone 3 then initiates a TFTP session with the central TFTP server. Once the TFTP session is complete, phone 3 sends the "TFTP Server Ready" message to the local area network. Other phones that are just completing their random back off and require the same software filename, add the new TFTP server (phone 3) to the top of the their TFTP server list. The other phones then initiate TFTP sessions with the new TFTP server.

In the scenario depicted in Figure 3, phone 3 downloads software to a single phone (phone 2) rather than the maximum permitted 5 phones. This is because by the time the next phone (phone 7) requests a TFTP session, additional phones (phone 8 and phone 4) have completed their TFTP sessions and been added to the top of the available server list. Therefore, following the software download to phone 2, phone 3 resumes normal operation and denies further TFTP requests from other phones 10 seconds after the TFTP session request from phone 2.

In another embodiment, the phones 14 are used to download software for other IP phones or to download the software to devices other than IP phones, such as personal digital assistants (PDAs), faxes and printers, for example. In order to download software to devices other than IP phones, the phones are programmed to download binaries meant for other devices. The phones 14 would have to modify the information in their broadcasts accordingly.

A specific embodiment of the present invention has been shown and described herein. However, modifications and variations may occur to those skilled in the art. All such modifications and variations are believed to be within the scope of the present invention.

An aspect of the invention comprises a computer program executed on an IP device to provide a TFTP client which can convert to a TFTP server and implement the above described method.

A further aspect of the invention comprises a storage medium storing the above computer program.

## Claims

1. A method for providing a distributed TFTP server network (10) among a plurality of IP devices, said method comprising:
providing said plurality of IP devices (1 to n), each of said IP devices being in communication with a central TFTP server;
each IP device maintaining a list of available servers;
at least one IP device selecting a TFTP server from said list of available servers and attempting to connect to said TFTP server;
downloading information from said TFTP server to said at least one IP device;
said at least one IP device sending a server ready signal over said distributed TFTP server network following successful download of said information whereupon said at least one IP device is added to the top of said list of available servers and operates as a further TFTP server for enabling other IP devices in said distributed TFTP server network to attempt to connect to said further TFTP server for downloading said information.

2. A method as claimed in claim 1, wherein each of said IP devices waits a random back off period following power up and prior to attempting to connect to either said TFTP server or said further TFTP server.

3. A method as claimed in claim 2, wherein said IP device having the shortest random back off period connects to the central TFTP server.

4. A method as claimed in claim 1, wherein said IP device is an IP phone.

5. A method as claimed in claim 1, wherein said information comprises software.

6. An IP device (1 to n) for use in a distributed TFTP server network (10) in which a plurality of IP devices are adapted to communicate with a central TFTP server, said IP device comprising:
a TFTP client for communicating with a TFTP server;
means for maintaining a list of available servers including said central TFTP server
means for downloading information from said TFTP server; and
means for sending a signal to said plurality of IP devices after said IP device has successfully downloaded information from said TFTP server, said IP device being added top-most on said list of available servers and said IP device, whereby said IP device operates as a further TFTP server for enabling other IP devices in said distributed TFTP server network to attempt to connect to said further TFTP server for downloading said information.

7. An IP device as claimed in claim 6, wherein said IP device is an IP phone.

8. An IP device as claimed in claim 6, wherein said information comprises software.

9. A computer program comprising instructions for controlling an IP device when executed by a processor of the device to carry out all of the steps of a method carried out by the IP device according to any of claims 1 to 5.

10. A storage medium storing a computer program as claimed in claim 9.

## Patentansprüche

1. Verfahren zum Bereitstellen eines verteilten TFTP-Servernetzwerks (10) zwischen mehreren IP-Geräten, wobei das Verfahren die folgenden Schritte umfaßt:
die mehreren IP-Geräte (1 bis n) werden bereitgestellt, wobei jedes der IP-Geräte mit einem zentralen TFTP-Server kommuniziert,
jedes IP-Gerät führt eine Liste verfügbarer Server,
mindestens ein IP-Gerät wählt einen TFTP-Server aus der Liste verfügbarer Server aus und versucht, eine Verbindung zu dem TFTP-Server aufzubauen,
Informationen vom TFTP-Server werden zu dem mindestens einen IP-Gerät heruntergeladen,
das mindestens eine IP-Gerät sendet ein "Server bereit"-Signal auf das erfolgreiche Herunterladen der Informationen hin über das verteilte TFTP-Servernetzwerk, worauf das mindestens eine IP-Gerät an die Spitze der Liste verfügbarer Server hinzugefügt wird und als ein weiterer TFTP-Server dient, um es anderen IP-Geräten in dem verteilten TFTP-Servernetzwerk zu ermöglichen, eine Verbindung zu dem weiteren TFTP-Server zum Herunterladen der Informationen aufzubauen.

2. Verfahren nach Anspruch 1, wobei jedes der IP-Geräte nach dem Hochfahren und vor dem Versuch, eine Verbindung entweder mit dem TFTP-Server oder dem weiteren TFTP-Server aufzubauen, einen zufälligen Zurückhaltezeitraum abwartet.

3. Verfahren nach Anspruch 2, wobei das IP-Gerät mit dem kürzesten zufälligen Zurückhaltezeitraum eine Verbindung mit dem zentralen TFTP-Server aufbaut.

4. Verfahren nach Anspruch 1, wobei das IP-Gerät ein IP-Telefon ist.

5. Verfahren nach Anspruch 1, wobei die Informationen Software umfassen.

6. IP-Gerät (1 bis n) zur Verwendung in einem verteilten TFTP-Servernetzwerk (10), in dem mehrere IP-Geräte dazu ausgelegt sind, mit einem zentralen TFTP-Server zu kommunizieren, wobei das IP-Gerät umfaßt:
einen TFTP-Client zum Kommunizieren mit einem TFTP-Server,
eine Einrichtung zum Führen einer Liste verfügbarer Server einschließlich des zentralen TFTP-Servers,
eine Einrichtung zum Herunterladen von Informationen vom TFTP-Server, und
eine Einrichtung zum Senden eines Signals an die mehreren IP-Geräte, nachdem das IP-Gerät erfolgreich Informationen vom TFTP-Server heruntergeladen hat, wobei das IP-Gerät an oberster Stelle zur Liste verfügbarer Server und des IP-Geräts hinzugefügt wird, wodurch das IP-Gerät als ein weiterer TFTP-Server dient, um anderen IP-Geräten im verteilten TFTP-Servernetzwerk den Versuch, eine Verbindung mit dem weiteren TFTP-Server zum Herunterladen der Informationen aufzubauen, zu ermöglichen.

7. IP-Gerät nach Anspruch 6, wobei das IP-Gerät ein IP-Telefon ist.

8. IP-Gerät nach Anspruch 6, wobei die Informationen Software umfassen.

9. Computerprogramm, umfassend Anweisungen zum Steuern eines IP-Geräts, die dieses, wenn sie von einem Prozessor des Geräts ausgeführt werden, alle Schritte eines vom IP-Gerät nach einem der Ansprüche 1 bis 5 ausgeführten Verfahrens ausführen lassen.

10. Speichermedium, das ein Computerprogramm nach Anspruch 9 speichert.

## Revendications

1. Procédé de fourniture d'un réseau réparti (10) de serveurs sous protocole banal de transfert de fichiers (TFTP pour "Trivial File Transfer Protocol") entre une pluralité de dispositifs sous protocole d'Internet (IP pour "Internet Protocol"), ledit procédé comprenant :
la fourniture de ladite pluralité de dispositifs (1 à n) sous IP, chacun desdits dispositifs sous IP étant en communication avec un serveur central sous TFTP ;
chaque dispositif sous IP entretenant une liste de serveurs disponibles ;
au moins un dispositif sous IP choisissant un serveur sous TFTP à partir de ladite liste de serveurs disponibles et tentant de se connecter audit serveur sous TFTP ;
le téléchargement d'information dudit serveur sous TFTP vers ledit au moins un dispositif sous IP ;
ledit au moins un dispositif sous IP envoyant un signal de serveur prêt sur ledit réseau réparti de serveurs sous TFTP à la suite du téléchargement réussi de ladite information, après quoi ledit au moins un dispositif sous IP est ajouté en haut de ladite liste de serveurs disponibles et agit comme un serveur supplémentaire sous TFTP pour permettre à d'autres dispositifs sous IP dans ledit réseau réparti de serveurs sous TFTP de tenter de se connecter audit serveur supplémentaire sous TFTP pour téléchargement de ladite information.

2. Procédé selon la revendication 1, dans lequel chacun desdits dispositifs sous IP attend une période aléatoire de temporisation à la suite de la mise sous tension et avant de tenter de se connecter à l'un ou l'autre dudit serveur sous TFTP ou dudit serveur supplémentaire sous TFTP.

3. Procédé selon la revendication 2, dans lequel ledit dispositif sous IP ayant la période aléatoire de temporisation la plus courte se connecte au serveur central sous TFTP.

4. Procédé selon la revendication 1, dans lequel ledit dispositif sous IP est un téléphone sous IP.

5. Procédé selon la revendication 1, dans lequel ladite information comprend du logiciel.

6. Dispositif (1 à n) sous IP pour utilisation dans un réseau réparti (10) de serveurs sous TFTP dans lequel une pluralité de dispositifs sous IP est apte à communiquer avec un serveur central sous TFTP, ledit dispositif sous IP comprenant :
un client sous TFTP pour communication avec un serveur sous TFTP ;
un moyen destiné à entretenir une liste de serveurs disponibles incluant ledit serveur central sous TFTP ;
un moyen destiné à télécharger de l'information en provenance dudit serveur sous TFTP ; et
un moyen destiné à envoyer un signal à ladite pluralité de dispositifs sous IP après que ledit dispositif sous IP a téléchargé avec succès l'information provenant dudit serveur sous TFTP, ledit dispositif sous IP étant ajouté au sommet de ladite liste de serveurs disponibles et dudit dispositif sous IP, ce par quoi ledit dispositif sous IP agit comme un serveur supplémentaire sous TFTP pour permettre à d'autres dispositifs sous IP dans ledit réseau réparti de serveurs sous TFTP de tenter de se connecter audit serveur supplémentaire sous TFTP pour téléchargement de ladite information.

7. Dispositif sous IP selon la revendication 6, dans lequel ledit dispositif sous IP est un téléphone sous IP.

8. Dispositif sous IP selon la revendication 6, dans lequel ladite information comprend du logiciel.

9. Programme d'ordinateur comprenant des instructions destinées à commander un dispositif sous IP lorsqu'il est exécuté par un processeur du dispositif pour effectuer toutes les étapes d'un procédé mis en oeuvre par le dispositif sous IP selon l'une quelconque des revendications 1 à 5.

10. Support de mémorisation mémorisant un programme d'ordinateur selon la revendication 9.
